# FASCICULE DE BREVET EUROPEEN

(11) **EP 0 926 807 B1**
(45) Date de publication et mention de la délivrance du brevet: **26.11.2008**
(21) Numéro de dépôt: 98410140.2
(22) Date de dépôt: 08.12.1998
(51) Int. Cl.: H02M 1/00, H02M 7/08, H02M 7/23

(54) **Convertisseur alternatif-continu triphasé**
Vorrichtung zur Umformung von Drehstrom in Gleichstrom
Three-phase AC/DC converter

(30) Priorité: 17.12.1997 FR 9716278
(43) Date de publication de la demande: 30.06.1999
(73) Titulaire: SCHNEIDER ELECTRIC INDUSTRIES SAS, 92500 Rueil-Malmaison (FR)
(72) Inventeur: Wang, Miao Xin, 38050 Grenoble Cedex 09 (FR)
(74) Mandataire: Jouvray, Marie-Andrée

(56) Documents cités:
- EP-A- 0 595 091
- WO-A-95/34939
- DE-A- 19 729 388
- US-A- 3 909 698
- US-A- 4 888 675
- US-A- 5 103 388
- PATENT ABSTRACTS OF JAPAN vol. 017, no. 223 (E-1359), 7 mai 1993 -& JP 04 355906 A (YOKOGAWA ELECTRIC CORP), 9 décembre 1992

## Description

L'invention concerne un convertisseur alternatif-continu comportant une entrée triphasée, susceptible d'être connectée à un réseau de tension alternative ayant une première période fondamentale, une sortie continue, et un premier circuit redresseur connecté entre ladite entrée et ladite sortie. Le document IEEE "Voltage Sag Ride-Through for Adjustable Speed Drives with Active Rectifiers" divulgue un circuit convertisseur ayant deux redresseurs composés des éléments passives et un circuit élévateur contrôlé et connecté à la sortie de l'un de deux redresseurs pour compenser des fléchissements d'un réseau auquel les deux redresseurs sont connectés en parallèle.

Les convertisseurs connus comportent souvent des redresseurs triphasés à diodes connectées au réseau alternatif et un condensateur de lissage de la tension continue connecté en sortie du redresseur. Cependant ce type de convertisseur produit sur le réseau des courants harmoniques très élevés. Ces courants harmoniques génèrent un taux de distorsion élevé même avec des inductances de filtrage d'entrée.

Pour limiter le taux de courants harmoniques, il est connu d'utiliser des redresseurs à transistors hacheurs commandés pour prélever sur le réseau un courant sinusoïdal. Cependant un tel convertisseur est très coûteux et complexe. De plus, la tension continue de sortie est très élevée pour la régulation du courant d'entrée. Ceci a pour conséquence l'utilisation de composants surdimensionnés ayant des tenues en tension élevée.

D'autres solutions consistent à combiner des redresseurs à diodes avec un hacheur. Cependant, dans de telles combinaisons le courant circulant dans les diodes a une fréquence très élevée. Ce type de convertisseurs a obligatoirement des diodes rapides. Ces diodes doivent également être surdimensionnées pour faire passer des courants de pic importants à chaque impulsion du hacheur. De plus, un filtre haute fréquence est nécessaire pour éliminer la fréquence du hacheur.

Les solutions proposées dans l'état de l'art ne permettent pas d'être appliquées à des convertisseurs déjà installés. Un respect des normes de perturbations nécessite alors un remplacement total des convertisseurs de type connu.

L'invention a pour but un convertisseur alternatif-continu triphasé simple et économique produisant un faible taux de courant harmonique.

Un convertisseur selon l'invention comporte un dispositif de compensation comportant :
- un second circuit redresseur comportant des redresseurs commandés connectés à l'entrée triphasée,
- un circuit élévateur ayant une entrée connectée à une sortie du second circuit redresseur et une sortie connectée à la sortie continue, et
- un circuit de contrôle connecté au second circuit redresseur et au circuit élévateur pour contrôler un courant de compensation circulant dans ledit second circuit redresseur et ledit circuit élévateur.

De préférence, les redresseurs commandés du second circuit redresseur comportent des thyristors.

Le courant de compensation compense des harmoniques de courant générés par le premier circuit redresseur.

Avantageusement, le circuit de contrôle commande des départs de conduction des redresseurs commandés selon un retard d'amorçage prédéterminé.

Le circuit de contrôle commande le circuit élévateur pour contrôler la forme et l'amplitude du courant de compensation.

Dans un mode de réalisation préférentiel, le courant de compensation a une forme périodique ayant une seconde période sensiblement égale à un sixième de la première période fondamentale de la tension alternative d'un réseau connecté à l'entrée.

Avantageusement, le courant de compensation a pour chaque seconde période une forme comportant une première partie croissante en début de conduction des redresseurs commandés, une seconde partie sensiblement constante, et une troisième partie décroissante pour arrêter la conduction.

De préférence, la première partie croissante a une durée comprise entre deux et trois dixièmes de la seconde période et la seconde partie sensiblement constante a une durée comprise entre un demi et deux dixièmes de la seconde période.

Dans un mode de réalisation particulier, le convertisseur comporte des moyens de filtrage de courant de mode commun disposés en série avec le circuit élévateur.

De préférence, les moyens de filtrage de mode commun comportent une inductance comportant un premier et un second enroulements enroulés en série dans le même sens sur un circuit magnétique, ledit circuit magnétique comportant un shunt magnétique à entrefer disposé entre le premier et le second enroulements.

Avantageusement, le circuit élévateur comporte au moins une inductance connectée à la sortie du second circuit redresseur, au moins un semi-conducteur de puissance connecté à ladite au moins une inductance, et au moins une diode anti-retour connectée à ladite au moins une inductance.

Selon un premier mode de réalisation différent, le circuit élévateur comporte au moins deux semi-conducteurs de puissance connectés à ladite au moins une inductance et deux condensateurs connectés en série et reliés à la sortie continue, des points communs intermédiaires des semi-conducteurs de puissance et des condensateurs étant reliés.

Selon un second mode de réalisation différent, ladite au moins une inductance est un enroulement primaire d'un transformateur.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
La figure 1 représente le schéma bloc d'un convertisseur de type connu ;
La figure 2 illustre l'allure d'un courant circulant dans une ligne d'entrée d'un convertisseur selon la figure 1;
La figure 3 montre un schéma d'un convertisseur selon un mode de réalisation de l'invention
Les figures 4a à 4c montrent des courbes de courant circulant dans un convertisseur selon la figure 3 ;
La figure 5 montre un schéma détaillé d'un convertisseur selon un mode de réalisation de l'invention ;
La figure 6 montre l'allure d'un courant périodique, moyen de compensation ;
La figure 7 montre l'allure d'un courant de compensation pendant une période dudit courant de compensation ;
Les figures 8 à 10 montrent des modes de réalisation de filtres de courant de mode commun ;
La figure 11 montre des courants d'une période du courant de compensation ;
La figure 12 montre des moyens de mesure de courant circulant dans le premier redresseur ;
La figure 13 montre l'allure d'une période de courant de compensation ;
La figure 14 montre un schéma d'un convertisseur selon un second mode de réalisation de l'invention ;
Les figures 15a à 15c montrent des courbes de courant circulant dans un convertisseur selon un mode de réalisation de la figure 14 ;
Les figures 16a et 16b montrent une analyse spectrale d'un courant circulant dans un premier circuit redresseur et d'un courant de ligne compensé ;
La figure 17 montre un schéma d'un circuit élévateur comportant un transformateur.

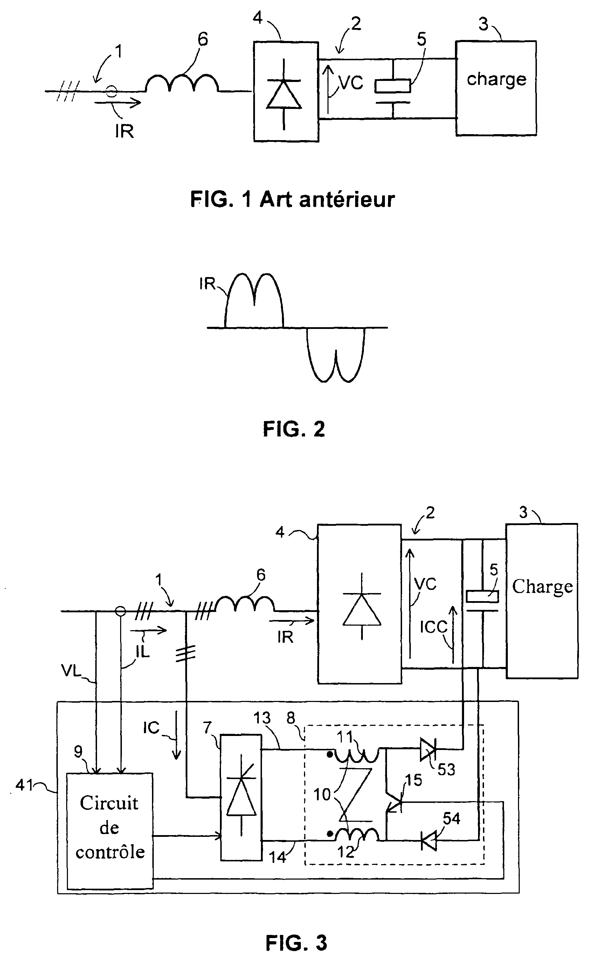

Le convertisseur alternatif-continu de type connu représenté sur la figure 1 comporte une entrée triphasée 1 connectée à un réseau alternatif, une sortie continue 2 fournissant une tension continue VC à une charge 3, et un premier circuit redresseur 4 à diode connecté entre ladite entrée 1 et ladite sortie 2. La tension continue VC est filtrée et lissée par un condensateur 5 connecté en parallèle sur la sortie 2 entre le circuit redresseur et la charge 3. Une inductance 6 disposée en série sur l'entrée 1 permet de filtrer les courants d'entrée.

Les courants dans les lignes d'entrée du convertisseur sont généralement perturbés puisque la charge et le condensateur ont une tension continue qui impose un fonctionnement non-linéaire du redresseur. En effet, les diodes du convertisseur conduisent lorsque la tension des lignes d'entrée dépasse la tension continue VC. La forme d'un courant IR d'une ligne d'entrée d'un redresseur est représentée sur la figure 2. Le taux d'harmonique d'un tel courant risque d'être très élevé, il peut perturber des appareils électriques connectés sur le réseau.

Dans un convertisseur selon un mode de réalisation de l'invention, un dispositif de compensation fait circuler entre l'entrée et la sortie un courant de compensation pour compenser les harmoniques de courant générés par le premier circuit redresseur.

Pour générer le courant de compensation, le dispositif de compensation comporte un second circuit redresseur et un circuit élévateur commandés par un circuit de contrôle.

La figure 3 montre un schéma d'un convertisseur selon un mode de réalisation de l'invention. Le convertisseur comporte un dispositif de compensation comportant un second circuit redresseur 7 connecté à l'entrée triphasée 1, un circuit élévateur 8 connecté entre le second circuit redresseur et la sortie continue 2 du premier redresseur, et un circuit de contrôle 9 cornecté au second redresseur et au circuit élévateur 8 pour commander un courant de compensation IC circulant dans le second redresseur et le circuit élévateur. Le courant de compensation circule dans les lignes triphasées d'entrée du second redresseur 7.

Le second circuit redresseur 7 comporte des redresseurs commandés pour contrôler le courant de compensation de chaque ligne d'entrée. De préférence, les redresseurs commandés sont des thyristors dont l'électrode de commande est contrôlée par des signaux fournis par le circuit de contrôle 9.

Le circuit élévateur 8 comporte une inductance 10 répartie sur deux enroulements 11 et 12 disposés en série sur deux lignes respectivement 13 et 14 polarisées en continu respectivement de polarité positive et négative, et un composant hacheur connecté en aval desdits enroulements de l'inductance. Le composant hacheur est par exemple un transistor ayant ses électrodes de puissance connectées aux enroulements 11 et 12 et l'électrode de commande connectée au circuit de contrôle 9. Des diodes 53 et 54 anti-retour sont connectées entre les parties en aval des enroulements respectivement 11 et 12 du circuit élévateur et deux conducteurs de la sortie de tension continue VC du premier redresseur 4. Les diodes 53 et 54 empêchent la décharge du condensateur 5 lorsque la tension sur le hacheur est plus faible que la tension de sortie continue VC.

Le circuit élévateur 8 permet de faire circuler un courant IC quelle que soit la tension d'entrée sur le réseau 1. Dans ce mode de réalisation le circuit élévateur comporte un hacheur à transistor qui court-circuite la partie en aval de l'inductance 10 pour générer un courant et qui ouvre le circuit pour injecter un courant ICC généré sur la sortie du premier redresseur 4.

Le circuit de contrôle 9 reçoit un signal de courant représentatif des courants IR circulant dans l'entrée du premier redresseur ou de courants d'entrée IL de ligne fournis par le réseau. Le signal représentatif du courant IL est aussi représentatif de la somme des courants IR et des courants de compensation IC. Ainsi le circuit de contrôle 9 contrôle la phase et l'amplitude des courants IC de compensation.

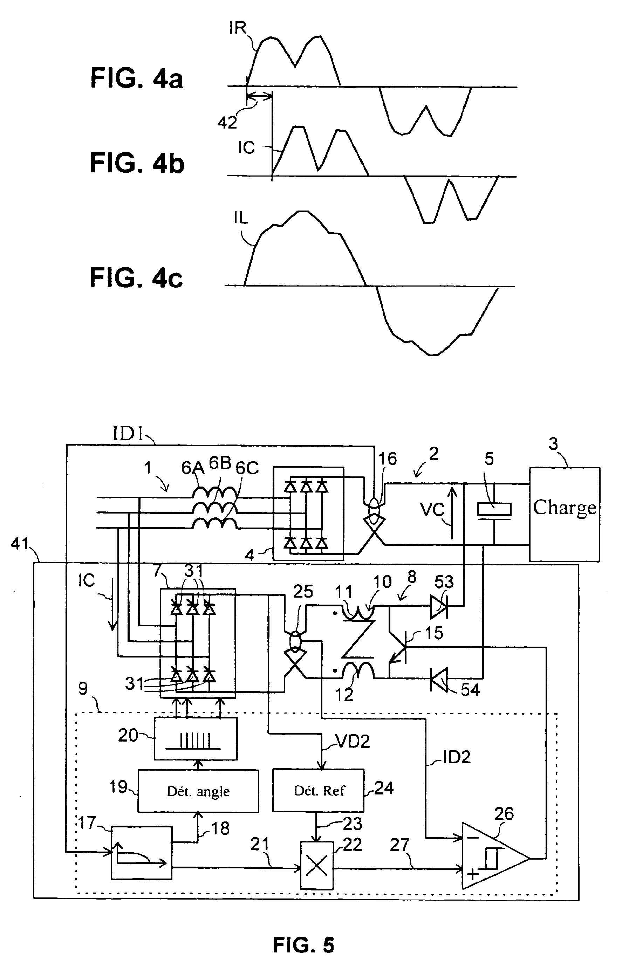

La figure 4a montre le courant perturbé IR d'une phase d'entrée d'un premier redresseur 4, et la figure 4b montre un courant de compensation IC généré par un dispositif de compensation comportant un second circuit redresseur 7, un circuit élévateur 8 et un circuit de contrôle 9. Le courant IC a un retard d'amorçage 42 par rapport au courant Ih. La figure 4c illustre un courant IL de ligne représentant un courant IR compensé par un courant IC. Ainsi, le courant IL représente la somme des courants IR et IC.

Un autre mode de réalisation d'un convertisseur selon l'invention est représenté sur la figure 5. Dans ce mode de réalisation, un premier dispositif de mesure de courant 16 mesure le courant sortant du premier redresseur 4 et fournit un signal ID1 au circuit de contrôle 9. Le dispositif de mesure 16 mesure le courant sortant différentiel entre deux conducteurs mais rejette un courant de mode commun qui pourrait circuler entre ces deux conducteurs. Pour réaliser cette fonction, un des deux conducteurs est inversé dans le dispositif 16 qui mesure les courants des deux conducteurs Ainsi, le courant sortant utile ayant un sens opposé dans chaque conducteur est représenté par la somme des deux courants et le courant de mode commun ayant le même sens dans les deux conducteurs est réduit. Le signal de courant ID1 est appliqué à l'entrée d'un filtre passe-bas 17 du circuit 9. Une sortie du circuit 17 fournit un premier signal 18 à un circuit 19 de détermination d'un angle d'amorçage des redresseurs commandés du second redresseur 7. Les redresseurs commandés étant de préférence des thyristors 31, un circuit 20 générateur d'impulsions de commande est connecté entre le circuit 19 de détermination et le second circuit redresseur 7.

Le filtre passe-bas 17 fournit un second signal 21 à un dispositif détecteur 22 réalisée de préférence par un circuit ayant une fonction de multiplieur. Ce circuit 22 reçoit un signal de référence 23 déterminé par un circuit de détermination de référence 24 connecté à la sortie du second redresseur 7. Le circuit 24 détermine le signal 23 de référence en fonction d'un signal de tension VD2 représentatif de la tension de sortie du second circuit redresseur 7.

Un second dispositif de mesure 25 est disposé en sortie du second circuit redresseur 7. Ce circuit mesure le courant sortant différentiel et rejette un courant de mode commun. Il fournit un signal ID2 représentatif du courant sortant à une première entrée d'un circuit comparateur 26. Une seconde entrée dudit circuit comparateur 26 reçoit un signal 27 fournit par une sortie du dispositif détecteur 22. Une sortie du comparateur 26 est connectée à la base du transistor 15 pour commander le circuit élévateur 8.

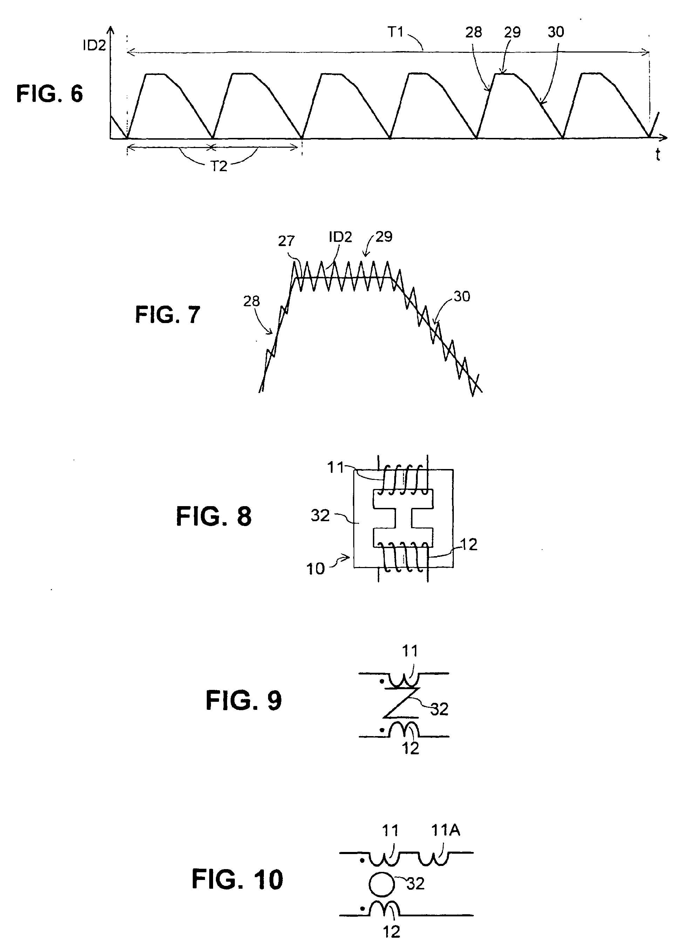

La figure 6 montre l'allure d'un courant périodique moyen de compensation sortant du second circuit redresseur 7 et représenté par le signal ID2. Le courant global de compensation a de préférence une forme périodique de fréquence supérieure à une fréquence fondamentale de la fréquence du réseau.

Dans ce mode de réalisation correspondant à la fréquence d'un réseau, une période du réseau T1 comporte six périodes T2 correspondant à la fréquence du courant de sortie du second redresseur. Cette période T2 dépend de l'harmonique de courant à supprimer.

De préférence, dans chaque période T2 du courant de compensation, le courant a une partie sensiblement croissante 28, une partie sensiblement stable 29 et une partie sensiblement décroissante 30.

A chaque début de période, le courant commence à croître et des redresseurs commandés tels que des thyristors 31 sont déclenchés pour commencer à conduire. A la fin d'une période T2, les thyristors 31 se bloquent en attendant une nouvelle commande fournie par les circuit 19 et 20.

Pour déterminer le courant de compensation souhaité, le signal de référence 27 est déterminé en fonction du signal de tension VD2 et d'un signal fourni 17 par le filtre passe-bas. Le signal de référence 27 est représentatif de la forme du courant de chaque période T2. Ainsi, si le courant de sortie du premier redresseur augmente, le signal ID1 augmente, le signal 21 fourni par le filtre 17 augmente, et par conséquent le signal de référence 27 a une amplitude plus élevée pour augmenter le courant de compensation.

La figure 7 montre des signaux appliqués aux entrées du comparateur 26 pendant une période T2. Le signal de référence 27 a une forme prédéterminée fournie par le circuit 22 et le signal ID2 oscille au-dessus et au-dessous du signal de référence en fonction de l'état du transistor 15. L'amplitude de l'oscillation, autour d'une valeur moyenne sensiblement égale au signal de référence, dépend de l'hystérésis du comparateur 26.

L'inductance 10 a une première fonction permettant de générer une élévation de tension et une seconde fonction permettant de filtrer un courant de mode commun. Une inductance 10 est représentée sur les figures 8, 9 et 10.

Pour assurer ces deux fonctions, l'inductance 10 comporte un circuit magnétique 32 sur lequel sont disposés deux enroulements. Chaque enroulement est connecté en série avec une ligne de sortie du second convertisseur pour filtrer le courant de mode commun. Les enroulements sont traversés par un flux magnétique qui ajoute les valeurs des inductances des deux enroulements 11 et 12. Dans un mode de réalisation préférentiel, le circuit magnétique comporte un shunt à entrefer pour améliorer le fonctionnement. Le shunt magnétique est disposé entre deux portions du circuit magnétique entre les deux enroulements 11 et 12.

Les valeurs des enroulements 11 et 10 peuvent être identiques ou différents. Sur la figure 10 un enroulement 11A supplémentaire est connecté en série avec l'enroulement 11 pour augmenter l'inductance d'une ligne par rapport à une autre.

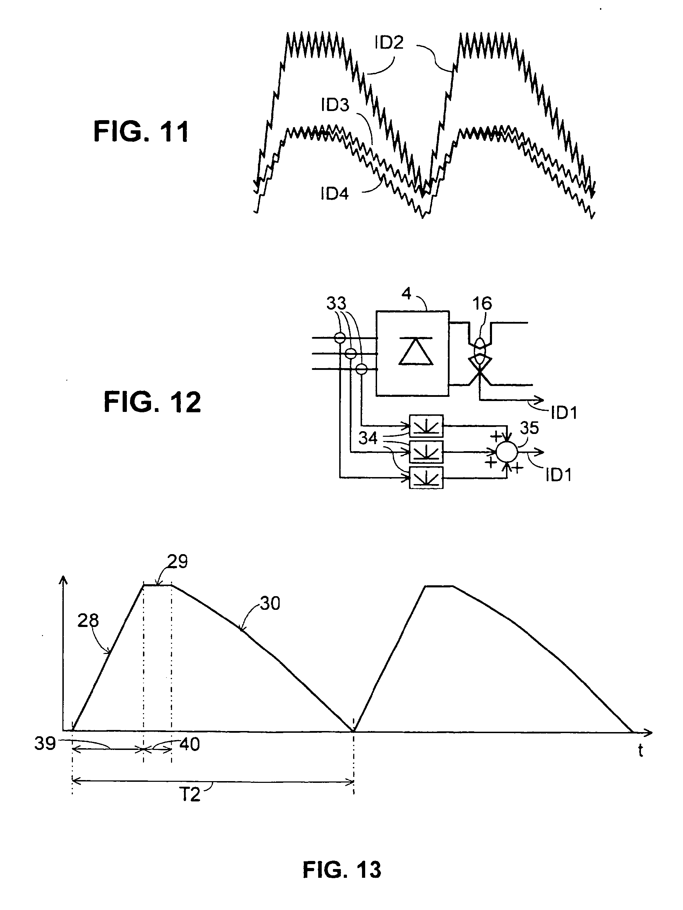

La figure 11 illustre un courant ID3 d'une première ligne de sortie, un courant ID4 d'une seconde ligne de sortie et un signal ID2 représentatif de la somme des courants des lignes de sortie du second redresseur 7. La valeur absolue des signaux ID3 et ID4 n'étant pas identique, un courant de mode commun circule dans le second redresseur 7. La régulation du courant de compensation se fait sur l'ensemble des courants de sortie représentés par le signal ID2.

La mesure des courants IR représenté par le signal ID1 ou du courant IC représenté par le signal ID2 se fait de préférence en rejetant les courants de mode commun. Une première solution consiste à inverser un des deux fils de sortie d'un redresseur 4 ou 7 avant de le faire passer dans un des dispositifs de mesure 16 ou 25. Dans une seconde solution, il est possible de mesurer chacun des courants alternatifs d'entrée des redresseurs, puis de détecter un signal redressé représentatif de la valeur absolue de chaque signal et d'appliquer ces signaux à un sommateur pour avoir un signal représentatif de la somme de la valeur absolue des signaux de courant.

La figure 12 montre deux solutions possibles pour mesurer les courants traversant le redresseur 4. Des capteurs de courants 33 disposés en entrée du redresseur 4 fournissent des signaux à des détecteurs 34 de valeurs absolues. Un sommateur reçoit des signaux détectés par les détecteurs 34 et fournit le signal ID1.

La figure 13 montre l'allure d'un signal de référence 27 ou d'un courant moyen de compensation représenté par le signal ID2. Pour une période T2 sensiblement égale à un sixième de la période du réseau T1, une première partie croissante 28 a de préférence une durée 39 comprise entre deux et trois dixièmes de la période T2, et une seconde partie 29 sensiblement constante a de préférence une durée 40 comprise entre un demi et deux dixièmes de la période T2.

Pour compenser des courants IR ayant une forme semblable à celle de la figure 4a, le courant de compensation IC de chaque phase aura par exemple deux périodes successives T2 avec une forme de courant prédéterminée et une période T2 sans courant. Ensuite, la polarité est inversée comme représentée sur la figure 4b. La polarité et la présence du courant de forme prédéterminées pendant une période sont contrôlées par la commande des thyristors 31.

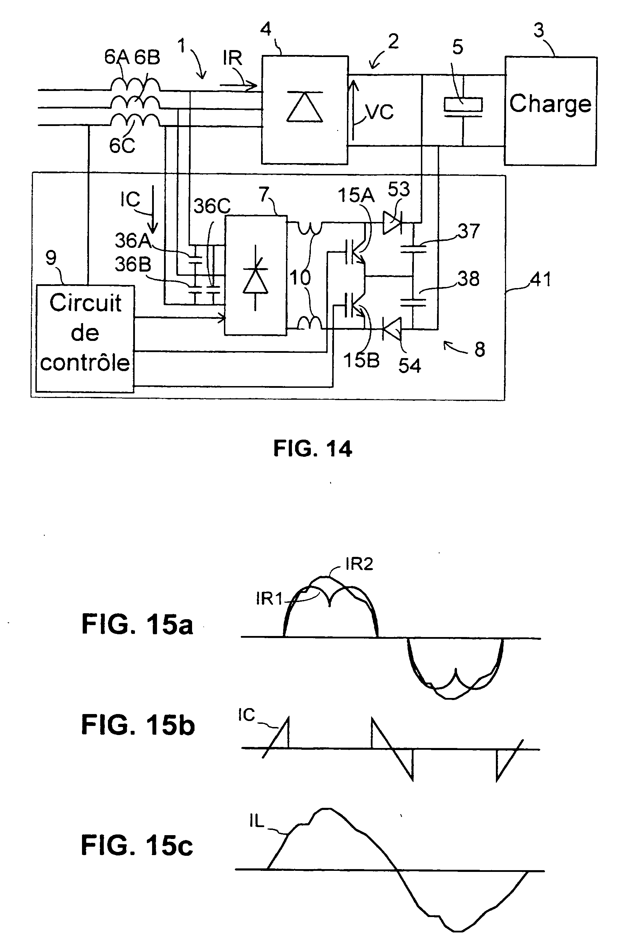

La figure 14 montre un second mode de réalisation de l'invention. Le second circuit redresseur 7 est connecté à l'entrée du premier circuit redresseur 4 après des inductances de filtrage 6A, 6B et 6C. Des condensateurs 36A, 36B et 36C sont connectés sur les entrées des deux circuits redresseurs 4 et 7 pour effectuer une partie du filtrage en association avec les inductances 6A, 6B et 6C.

Le circuit élévateur comporte, dans ce mode de réalisation, un hacheur à deux étages comportant deux transistors 15A et 15B en série connectés en aval de l'inductance 10. En sortie du circuit élévateur, deux condensateurs 37 et 38 sont connectés en série sur la tension continue de sortie VC. Le point commun des condensateurs est connecté à un point commun entre les deux transistors 15A et 15B. Cette disposition permet de diminuer la tension appliquée à chaque transistor. Ainsi, les transistors 15A et 15B peuvent avoir une tension de fonctionnement plus faible.

Des courants de mode commun peuvent circuler entre le premier circuit redresseur 4 et le dispositif de compensation 41. Ces courants se combinent avec les courants d'entrée IR et peuvent modifier le courant prélevé sur le réseau électrique 1. Les formes de courants sont alors modifiées et le courant de compensation doit être différent.

La figure 15a montre un courant d'entrée IR1 initial et un courant IR2 modifié par un courant de mode commun. Le courant IR2 ne comporte pas de creux entre deux lobes d'une alternance. Par conséquent, le courant de compensation IC doit être de forme différente. Une forme appropriée du courant IC pendant une période T1 est représentée sur la figure 15b.

La figure 15c montre un courant de ligne filtrée IL comportant moins d'harmonique perturbateurs que le courant d'entrée IR du premier circuit redresseur 4.

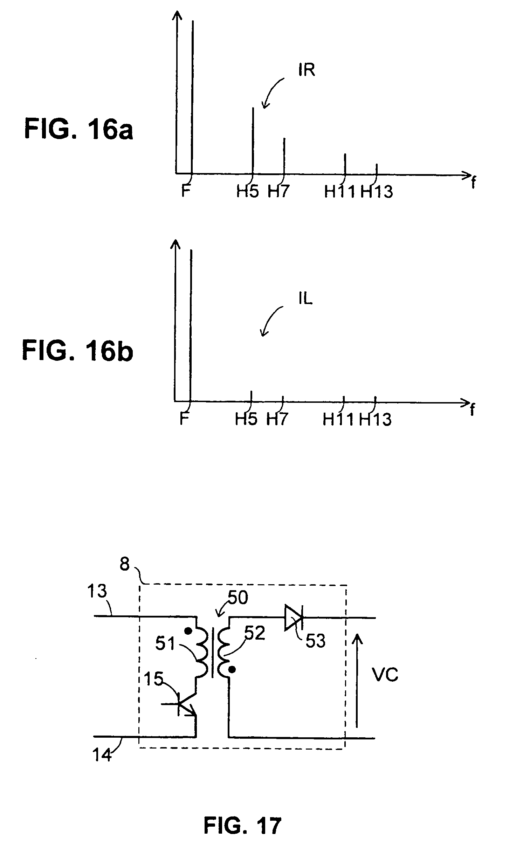

Le dispositif de compensation 41 est particulièrement bien adapté pour la suppression des harmoniques de courant de rangs cinq H5, sept H7 et onze H11 par rapport à la fréquence fondamentale F du réseau 1. Les figures 16a et 16b représentent des analyses fréquencielles respectivement d'un courant IR et d'un courant IL avec un dispositif de compensation.

La figure 17 montre un schéma d'un circuit élévateur comportant un transformateur 50. Dans ce mode de réalisation, le transistor 15 est connecté en série avec un enroulement primaire 51 du transformateur entre les lignes 13 et 14 de sortie du second circuit redresseur. L'enroulement primaire remplace ainsi l'inductance 10. Un enroulement secondaire 52 du transformateur est connecté, à travers une diode anti-retour 53, à la sortie continue 2 du premier circuit redresseur pour injecter un courant de compensation. Ce mode réalisation permet de réduire efficacement les courants de mode commun.

Les transistors 15, 15A et 15B sont de préférence des transistors bipolaires à électrode de commande à effet de champ (IGBT), mais d'autres types de transistors peuvent être utilisé notamment des transistors à effet de champs métal-oxide-semiconducteurs (MOS).

Le circuit 9 de contrôle peut être réalisé avec des circuits logiques, analogiques, ou programmés.

Les signaux de courants appliqués au circuit de contrôle peuvent être mesurés en amont ou en aval des circuits redresseurs. Ils peuvent être mesurés par divers dispositifs de mesure, notamment ohmiques, inductifs, à cellules effet Hall, ou à magnéto-résistances.

Le circuit élévateur 8 peut être réalisé par d'autres moyens notamment par des circuits à transformateurs ou par des circuits à commutation de condensateurs.

Les redresseurs commandés sont de préférence des thyristors mais ils peuvent être remplacés par des circuits interrupteurs commandés, des transistors ou d'autres composants électroniques de puissance.

## Revendications

1. Convertisseur alternatif-continu comportant une entrée triphasée (1), susceptible d'être connectée à un réseau de tension alternative ayant une première période fondamentale (T1), une sortie continue (2), et un premier circuit redresseur (4) connecté entre ladite entrée et ladite sortie, ledit
convertisseur comporte un dispositif de compensation (41) comportant :
- un second circuit redresseur (7) comportant des redresseurs commandés (31) connectés à l'entrée triphasée,
- un circuit élévateur (8) ayant une entrée connectée à une sortie du second circuit redresseur (7) et une sortie connectée à la sortie continue (2), et
- un circuit de contrôle (9) connecté au second circuit redresseur (7) et au circuit élévateur (8) pour contrôler un courant de compensation circulant (IC) dans ledit second circuit redresseur et ledit circuit élévateur.

2. Convertisseur selon la revendication 1 **caractérisé en ce que** les redresseurs commandés du second circuit redresseur (7) comportent des thyristors (31).

3. Convertisseur selon l'une des revendications 1 ou 2 **caractérisé en ce que** le courant de compensation (IC) compense des harmoniques de courant générés par le premier circuit redresseur.

4. Convertisseur selon l'une quelconque des revendications 1 à 3 **caractérisé en ce que** le circuit de contrôle (9) commande des départs de conduction des redresseurs commandés selon un retard d'amorçage prédéterminé (42).

5. Convertisseur selon l'une quelconque des revendications 1 à 4 **caractérisé en ce que** le circuit de contrôle (9) commande le circuit élévateur (8) pour contrôler la forme et l'amplitude du courant de compensation (IC).

6. Convertisseur selon l'une quelconque des revendications 1 à 5 **caractérisé en ce que** le courant de compensation (IC) a une forme périodique ayant une seconde période (T2) sensiblement égale à un sixième de la première période fondamentale de la tension alternative d'un réseau connecté à l'entrée.

7. Convertisseur selon la revendication 6 **caractérisé en ce que** le courant de compensation a pour chaque seconde période (T2) une forme comportant une première partie (28) croissante en début de conduction des redresseurs commandés, une seconde partie sensiblement constante (29), et une troisième partie (30) décroissante pour arrêter la conduction.

8. Convertisseur selon la revendication 7 **caractérisé en ce que** la première partie croissante a une durée comprise entre deux et trois dixièmes de la seconde période (T2) et la seconde partie sensiblement constante a une durée comprise entre un demi et deux dixièmes de la seconde période (T2).

9. Convertisseur selon l'une quelconque des revendications 1 à 8 **caractérisé en ce qu'**il comporte des moyens de filtrage de courant de mode commun disposés en série avec le circuit élévateur (8).

10. Convertisseur selon la revendication 9 **caractérisé en ce que** les moyens de filtrage de mode commun comportent une inductance (10) comportant un premier et un second enroulements (11, 12) enroulés en série dans le même sens sur un circuit magnétique (32), ledit circuit magnétique comportant un shunt magnétique à entrefer disposé entre le premier et le second enroulements.

11. Convertisseur selon l'une quelconque des revendications 1 à 10 **caractérisé en ce** le circuit élévateur (8) comporte au moins une inductance (10, 11, 11a, 12) connectée à la sortie du second circuit redresseur, au moins un semi-conducteur de puissance (15, 15a, 15b) connecté à ladite au moins une inductance, et au moins une diode anti-retour (53, 54) connectée à ladite au moins une inductance.

12. Convertisseur selon la revendication 11 **caractérisé en ce que** le circuit élévateur comporte au moins deux semi-conducteurs de puissance (15A, 15B) connectés à ladite au moins une inductance et deux condensateurs (37, 38) connectés en série et reliés à sortie continue (2), des points communs intermédiaires des semi-conducteurs de puissance et des condensateurs étant reliés.

13. Convertisseur selon l'une des revendications 10 ou 11 **caractérisé en ce que** ladite au moins une inductance est un enroulement primaire (51) d'un transformateur (50).

## Claims

1. An AC-to-DC converter comprising a three-phase input (1) able to be connected to an AC voltage power system having a first fundamental period (T1), a DC output (2), and a first rectifier circuit (4) connected between said input and said output, said converter comprising a compensation device (41) comprising:
- a second rectifier circuit (7) comprising controlled rectifiers (31) connected to the three-phase input,
- a step-up circuit (8) having an input connected to an output of the second rectifier circuit (7) and an output connected to the DC output (2), and
- a control circuit (9) connected to the second rectifier circuit (7) and to the step-up circuit (8) to control a compensation current (IC) flowing in said second rectifier circuit and said step-up circuit.

2. The converter according to claim 1 **characterized in that** the controlled rectifiers of the second rectifier circuit (7) comprise thyristors (31).

3. The converter according to one of claims 1 or 2 **characterized in that** the compensation current (IC) compensates current harmonics generated by the first rectifier circuit.

4. The converter according to any one of claims 1 to 3 **characterized in that** the control circuit (9) controls turn-on feeders of the controlled rectifiers with a preset turn-on lag (42).

5. The converter according to any one of claims 1 to 4 **characterized in that** the control circuit (9) controls the step-up circuit (8) to control the shape and amplitude of the compensation current (IC).

6. The converter according to any one of claims 1 to 5 **characterized in that** the compensation current (IC) has a periodic shape having a second period (T2) substantially equal to one sixth of the first fundamental period of the AC voltage of a power system connected to the input.

7. The converter according to claim 6 **characterized in that** for each second period (T2) the compensation current (IC) has a shape comprising a first part (28) increasing at the beginning of turn-on of the controlled rectifiers, a substantially constant second part (29), and a decreasing third part (30) to stop turn-on.

8. The converter according to claim 7 **characterized in that** the increasing first part has a duration comprised between two and three tenths of the second period (T2) and the substantially constant second part (29) has a duration comprised between a half and two tenths of the second period (T2).

9. The converter according to any one of claims 1 to 8 **characterized in that** it comprises common mode current filtering means arranged in series with the step-up circuit (8).

10. The converter according to claim 9 **characterized in that** the common mode current filtering means comprise an inductance coil (10) comprising a first and second windings (11, 12) wound in series in the same direction on a magnetic circuit (32), said magnetic circuit comprising a magnetic shunt with an air-gap arranged between the first and second windings.

11. The converter according to any one of claims 1 to 10 **characterized in that** the step-up circuit (8) comprises at least one inductance coil (10, 11, 11a, 12) connected to the output of the second rectifier circuit, at least one power semi-conductor (15, 15a, 15b) connected to said at least one inductance coil, and at least one anti-reverse diode (53, 54) connected to said at least one inductance coil.

12. The converter according to claim 11 **characterized in that** the step-up circuit (8) comprises at two power semi-conductors (15A, 15B) connected to said at least one inductance coil and two capacitors (37, 38) connected in series and connected to the DC output (2), intermediate common points of the power semi-conductors and of the capacitors being connected to one another.

13. The converter according to claim 10 or 11 **characterized in that** said at least one inductance coil is a primary winding (51) of a transformer (50).

## Patentansprüche

1. Wechselspannungs-Gleichspannungs-Wandler mit einem Dreiphaseneingang (1) zum Anschluss an ein Wechselspannungsnetz, dessen Spannung eine erste Grundschwingungsdauer (TF) aufweist, mit einem Gleichspannungsausgang (2) sowie mit einer zwischen den genannten Eingang und den genannten Ausgang geschalteten ersten Gleichrichterschaltung (4), welcher Wandler eine Kompensationsschaltung (41) mit
- einer zweiten Gleichrichterschaltung (7), die an den Dreiphaseneingang angeschlossene gesteuerte Gleichrichter (31) umfasst,
- einer Aufspannschaltung (8), die einen an einen Ausgang der zweiten Gleichrichterschaltung (7) angeschlossenen Eingang und einen an den Gleichspannungsausgang (2) angeschlossenen Ausgang umfasst, sowie mit
- einer Steuerschaltung (9) umfasst, die an die zweite Gleichrichterschaltung (7) und an die Aufspannschaltung (8) angeschlossen ist, um einen über die genannte zweite Gleichrichterschaltung und die genannte Aufspannschaltung fließenden Kompensationsstrom (IC) zu steuern.

2. Wandler nach Anspruch 1, **dadurch gekennzeichnet, dass** die gesteuerten Gleichrichter der zweiten Gleichrichterschaltung (7) Thyristoren (31) umfassen.

3. Wandler nach einem der Ansprüche 1 oder 2, **dadurch gekennzeichnet, dass** der Kompensationsstrom (IC) von der ersten Gleichrichterschaltung erzeugte Stromoberschwingungen kompensiert.

4. Wandler nach irgendeinem der Ansprüche 1 bis 3, **dadurch gekennzeichnet, dass** die Steuerschaltung (9) die Leitungspfade der gesteuerten Gleichrichter mit einer bestimmten Zündverzögerung (42) ansteuern.

5. Wandler nach irgendeinem der Ansprüche 1 bis 4, **dadurch gekennzeichnet, dass** die Steuerschaltung (9) die Aufspannschaltung (8) ansteuert, um die Wellenform und die Amplitude des Kompensationsstroms (IC) zu steuern.

6. Wandler nach irgendeinem der Ansprüche 1 bis 5, **dadurch gekennzeichnet, dass** der Kompensationsstrom (IC) eine periodische Form mit einer zweiten Schwingungsdauer (T2) aufweist, die annähernd einem Sechstel der ersten Grundschwingungsdauer der Wechselspannung eines an den Eingang angeschlossenen Leitungsnetzes entspricht.

7. Wandler nach Anspruch 6, **dadurch gekennzeichnet, dass** sich die zweite Schwingungsdauer (T2) des Kompensationsstroms jeweils aus einem ersten ansteigenden Abschnitt (28) entsprechend dem Beginn der Leitung der gesteuerten Gleichrichter, aus einem annähernd konstanten zweiten Abschnitt (29) sowie aus einem abfallenden dritten Abschnitt (30) zur Beendigung des Leitungszustands zusammensetzt.

8. Wandler nach Anspruch 7, **dadurch gekennzeichnet, dass** der erste ansteigende Abschnitt einer Dauer von zwei bis drei Zehnteln der zweiten Schwingungsdauer (T2) und der zweite annähernd konstante Abschnitt einer Dauer zwischen einer halben und zwei Zehnteln der zweiten Schwingungsdauer (T2) entspricht.

9. Wandler nach irgendeinem der Ansprüche 1 bis 8, **dadurch gekennzeichnet, dass** er Filtermittel zur Unterdrückung von Gleichtaktströmen umfasst, die mit der Aufspannschaltung (8) in Reihe geschaltet sind.

10. Wandler nach Anspruch 9, **dadurch gekennzeichnet, dass** die Gleichtakt-Filtermittel eine Induktivität (10) mit einer ersten und einer zweiten, im gleichen Wicklungssinn um einen Eisenkern (32) geführten Wicklung (11, 12) umfassen, wobei der Eisenkern ein zwischen der ersten und der zweiten Wicklung angeordnetes Nebenschlusseisen mit Luftspalt umfasst.

11. Wandler nach irgendeinem der Ansprüche 1 bis 10, **dadurch gekennzeichnet, dass** die Aufspannschaltung (8) mindestens eine an den Ausgang der zweiten Gleichrichterschaltung angeschlossene Induktivität (10, 11, 11a, 12), mindestens einen, an die genannte mindestens einfach vorhandene Induktivität angeschlossenen Leistungshalbleiter (15, I5a, I5b) und mindestens eine an die genannte mindestens einfach vorhandene Induktivität angeschlossene Rücklauf-Sperrdiode (53, 54) umfasst.

12. Wandler nach Anspruch 11, **dadurch gekennzeichnet, dass** die Aufspannschaltung mindestens zwei an die genannte mindestens einfach vorhandene Induktivität angeschlossene Leistungshalbleiter (15A, 15B) sowie zwei in Reihe geschaltete und an den Gleichspannungsausgang (2) angeschlossene Kondensatoren (37, 38) umfasst, wobei die gemeinsamen Anschlusspunkte der Leistungshalbleiter und der Kondensatoren miteinander verbunden sind.

13. Wandler nach irgendeinem der Ansprüche 10 oder 11, **dadurch gekennzeichnet, dass** die genannte mindestens einfach vorhandene Induktivität als Primärwicklung (51) eines Transformators (50) ausgebildet ist.
